# EUROPEAN PATENT APPLICATION

(11) **EP 3 351 102 A1**
(43) Date of publication of application: **25.07.2018**
(21) Application number: 16915915.9
(22) Date of filing: 26.12.2016
(51) Int. Cl.: A01N 25/30, A01N 25/00, A01P 7/04

(54) **RESIDUE REDUCTION METHOD FOR SHORTENING HALF-LIFE AND/OR COMPLETE DEGRADATION TIME OF PESTICIDE RESIDUE**

(30) Priority: 15.11.2016 CN 201611021737
(71) Applicant: Xu, Jianjun, Chengdu, Sichuan 610000 (CN)
(72) Inventor: Xu, Jianjun, Chengdu, Sichuan 610000 (CN)
(74) Representative: Herzog, Fiesser & Partner Patentanwälte PartG mbB
(86) International application number: PCT/CN2016/112019
(87) International publication number: WO 2018/090436

(57) **Abstract**

The residual pesticide-reducing method shortens the half life and/or the complete degradation time of pesticide residue. During the whole growing period of crops or before seeding, the available mixture consisted of the pesticide preparation at 45%∼100% of normal dose and the synergistic agent is applied for at least one time as the conventional way, in which the ratio of the pesticide preparation and the synergistic agent is 15∼45000 g or ml/60∼6000 ml per hectare. The synergist is the mixture of Tween surfactants and N-R-2-pyrrolidone recorded in Chinese patent with the number 96117683.0. Under the precondition of ensuring potency, and determining the usage amount of pesticide based on the occurrence circumstances of invasive pests, the method of the present invention can reduce up to 55% dosage of pesticide, as well as the half life of pesticide residue and/or the complete degradation time by above 50%. After administration in safety interval, the pesticide residue in agricultural products can be "undetectable", effectively ensuring the quality safety of agricultural products and the protection on environment/ecology.

## Description

### Technical Field

The present invention relates to one pesticide residue-reducing method that shortens the half life and/or the complete degradation time of pesticide residue in crops and/or agricultural products, and said agricultural products include grains, vegetables, tea, tobaccos, Chinese herbal medicines, fruits, etc.

### Background Art

Reducing the pesticide residue and lowering the pesticide residue, especially the pesticide residue in agricultural products, ensure the food safety, and protect human's life and health, as well as environmental ecology. China, European Union, America, Japan, etc., have made/are to make laws for forcible execution, and since a long time ago, the skills in arts of plant protection and pesticide have also continued for laudable efforts.

After the first organic pesticide obtained by chemical synthesis was used in 1940s, the usage amount of pesticides has been increased, and as the improvement of agricultural modernization degree, the application amount becomes more and more. It is impossible for agricultural production not to use pesticides, and organic agricultural products also need use pesticides, even if using biological pesticides is similarly harmful. If the pesticides are used, it is necessary to have a residue, and the more the usage amount, the more the residue.

Moreover, no matter how much the pesticide is remained, if it enters the human body, it will be nonadvantageous to the health. Thus, various methods are currently utilized at home and abroad, to try hard to clear or reduce the hazard and problems caused by pesticides. One of the methods is choosing pesticides with high activity and safety, as well as low residue, and interchangeably using them. But, since long-term use leads to the drug resistance, the effect of said method is unsatisfactory. At present, another measure used is choosing pesticides of biological source, that directly uses living organisms or bioactive materials produced in the process of biological metabolism or extracts from organisms for prevention of insert disease.

However, restricted by the factors such as high specificity, narrow insecticidal spectrum, limited resources, high cost, poor available effect and the same, the serviceable range is limited, and the effect is unsatisfactory, and long-term use also can cause the increase of usage amount due to the development of pesticide resistance, and lead to the raise of the residue. Further, green prevention and control technologies such as insecticidal lamps, gyplure, natural enemy, etc., have already been widely applied, but when pests get rich quickly, these measures almost do not have control actions, and similarly, there are problems such as narrow insecticidal spectrum, high cost, and inconvenient application. Transgenes and similar measures are new ways formed recently, but they may lead to the disbalance of biological chain, thus can cause the consequence that other pests become more epidemic. For example, transgenic insect-resistant cotton was planted in Xinjiang, and after transgenic technology was applied to resist cotton bollworms, that also caused the large-area outbreak of cotton aphids, thus at present, there are still many uncontrollable unknown factors for transgenic technology and its consequence. In addition, using integrated control and fallow and the same measures further play certain roles in reducing the usage amount of pesticides.

Combination with pesticide synergists or accessory ingredients is also the method available currently to reduce the amount of pesticides. Since the sesame oil is found to have synergistic action, dozens of potentiators and synergistic adjuvants have already been developed, but for most of them, the effectiveness is not good, and the light-heat stability is poor, etc. For example, organosilicon is currently the better synergist of peticides recognized globally, and because its synergia is realized by entrance via pores in plant leaves and results in the greatly reduced surface tension on leaves, on the one hand drug-induced sufferings are easily produced, and on the other hand the synergistic action do not still have broad spectrum.

Except that using in sterilant herbicides displays certain effects, for most crops, especially for sensitive crops or their sensitive period such as actinidia, strawberry, cayenne pepper, paddy flowering, as well as high temperature and drought, etc., organosilicon can bring about serious drug-induced sufferings, and the potency of a part of pesticides can further be cut down due to excellent wettability of crops and too much sedimentation. In the patent document with publication number CN101810192A, the inventors of present application have proposed a pesticides-mixed method for reducing the residue amount of pesticides in agricultural products, and the method is based on the combination of at least two kinds of pesticides at 15%∼40% of its standard dose (i.e. combined formulation), that can not thoroughly solve problems.

Therefore, on the one hand, because of intrinsic cause of pest drug-resistance; on the other hand, because of global warming, multi-cropping index and similar factors, the general trend that the usage amount of pesticides is increased year by year is caused, resulted in the further aggravation of environmental ecology. The residual amount of pesticides in crops is gradually increased, that greatly threatens the healthy life of humans. A series of consequences from the increase in the usage amount of pesticides and the residue increase in agricultural products are always an unresolved problem for all the countries in the world.

### Contents of the invention

Based on above conditions, the present invention provides one pesticide residue-reducing method that can effectively shorten the half life and/or the complete degradation time of pesticide residue in crops and/or agricultural products, and the method can be applied to shorten the half life and/or the complete degradation time of pesticide residue in crops and/or agricultural products, including grains, vegetables, tea leaves, tobaccos, Chinese herbal medicines, fruits, etc.. Moreover, lots of experiment proves the effectiveness and wide applicability of the method, effectively reducing and clearing the pesticide residue in agricultural products.

The pesticide residue-reducing method of the present invention, shortening the half life and/or the complete degradation time of pesticide residue, is characterized in that during the whole growing period of crops or before seeding, the available mixture consisted of the pesticide preparation at 45%∼100% of normal dose and the synergistic agent is applied for at least one time as the conventional way, in which the ratio of the pesticide preparation and the synergistic agent is 15∼45000 g or ml/60∼6000 ml per hectare. The synergist is the mixture of Tween surfactants and N-R-2-pyrrolidone recorded in Chinese patent with the number 96117683.0.

The whole growing period of crops mentioned in above method means the whole life cycle from seeding to harvest for annual crops (such as paddy, wheat, etc.); while it means the growth/development period of crops (including dormancy stage) from bourgeon to germination and flowering, then to dormancy in the year for perennial crops (such as trees, tea tree, etc.).

Pesticides mentioned in the method of the present invention include various insecticidal, bactericidal, antiviral agricultural chemicals having inhibitory or killing function/action against various agricultural pests, germs, viruses, and weeds, as well as diverse biocides including herbicides and growth regulators, etc., such as pyridaben, triazophos, lambda-cyhalothrin, deltamethrin, chlorfenapyr, fipronil, chlorantraniliprole, chlorpyrifos, cyhalothrin, monosultap, trazodone, acetochlor, glufosinate-ammonium, glyphosate, benazolin, quizalofop-p, mepiquat chloride, mancozeb, difenoconazole, tebuconazole, cyhalofop-butyl, bentazone, bensulfuron-methyl, indoxacarb, tricyclazole, imidacloprid, acetamiprid, carbendazim, abamectin, ICIA 5504, bifenthrin, kasugamycin, isoprothiolane, BAS 480F, azadirachtin, haloxyfop-P, fenoxaprop-P-ethyl, gibberellin, paclobutrazol, thiophanate-methyl and similar insecticides, bactericides, herbicides, growth regulators, with different chemical structures and/or different dosage forms, different contents, different action mechanisms. The pesticides mentioned in the method of the present invention include inorganic and organic agricultural chemicals, biogenic biocides, etc, and do not include natural enemies and transgenes.

In above applicable mixtures, the ratio of said pesticide preparation/synergist means the ratio of the amount of general pesticide formulation commercially available corresponding to selected pesticide and the amount of pure synergist, in which as the utilization rules of different kinds/species of pesticide preparations, the measuring unit of usage amount can be gram or milliliter.

In our country and other countries in the world, pesticides belong to special commercials, and pesticides must be registered and/or recognized by national legal departments before they are permitted to sale and use, and there are definite regulations on pesticide preparations including compositions, dosage forms, contents, dosage, administration frequencies, application methods, and safety intervals, etc.. Therefore, "pesticides" or "pesticide preparations" in the mixture mentioned in the method of the present invention both denote products/commercials permitted to sale and use that are registered and/or recognized by national legal departments. The meaning of said "standard dose" or "normal dosage" both are "normal doses", and together with "conventional methods", they mean the usage amount and the application method of corresponding pesticide registered and approved by national legal departments. According to the regulations, on the one hand, it is strictly forbidden for pesticide to be used above the registered dosage; on the other hand, many governments including our country also propose reducing the usage amount of pesticides, but under the current actual conditions, the administration below the registered amount can not usually realize the purpose of effectively controlling the damage caused by disease, pest, and grass. Therefore, depended on the actual situation, the method of the present invention can flexibly control the use of pesticide and reduce its amount, to reach the purpose of not only ensuring the effective control of diseases, pests, and grasses, but also saving resources. For example, when pests slightly develop, the pesticide preparation in the mixture can be used at 45%∼50% of standard dose; when the pests moderately develop, the pesticide preparation in the mixture can be used at 50%∼70% of standard dose; when the pests greatly outbreak and so on, the pesticide preparation in the mixture can be used at 80%∼100% of standard dose.

According to the application common sense and the convention of pesticides, except for several non-diluted pesticides permitted to be directly used, in general, the pesticide technical material or its commercial preparation can not be directly administrated to crops, and based on different pesticides and/or the crop kinds administrated and/or the application phase, corresponding pesticide is diluted at various ratio (such as aqueous dispersion or aqueous solution) before administration. Therefore, for the applicable form of the mixture in the method of the present invention, according to the application specification and request of corresponding pesticide, the pesticide is generally needed to be diluted with water to the usage form that are allowable to be directly administrated, except for those permitted to be directly used.

In above method of the present invention, the specific form of said mixture can be performed by mixing the synergist with corresponding pesticide as described way before administration (i.e. generally called tank mixture way), and by selling or using the commercially available mixture of pesticide preparations that is prepared from the synergist and corresponding pesticides, adjuvants, etc., as the mentioned ratio by factory.
In the mixture, the synergists are the mixture of Tween surfactants and N-R-2-pyrrolidone recorded in Chinese patent with the number 96117683.0, in which Tweens surfactants include Tween-20, Tween-40, Tween-60, Tween-65, Tween-80, Tween-85 and the same, that are currently permitted to be used in pesticides; said N-R-2-pyrrolidone can be selected from the group of N-H-2-pyrrolidone, N-methyl-2-pyrrolidone, N-ethyl-2-pyrrolidone, N-octyl-2-pyrrolidone, N-dodecyl-2-pyrrolidone. the volume composition of said synergists can be:

| | |
|---|---|
| Tweens surfactants | 15∼95%, |
| N-R-2-pyrrolidone | 5∼85%, |
| Common solvents for pesticides | 0∼50%. |

Wherein, the common solvents for pesticides can preferably be vegetable oil (methyl oleate), etc.
Based on mentioned above, said synergist can further preferably be composed of (v/v):

| | |
|---|---|
| Tweens surfactants | 30∼85%, |
| N-R-2-pyrrolidone | 8∼60%, |
| Common solvents for pesticides | 0∼50%. |

The better composition of said synergist is (v/v):

| | |
|---|---|
| Tweens surfactants | 45∼70%, |
| N-R-2-pyrrolidone | 10∼40%, |
| Common solvents for pesticides | 0∼50%. |

The application method of above mixture according to the present invention includes administrating to various surfaces of stem, leaves and/or the earth's surface, soils (such as underground sealing weeding, underground insect disease prevention, seed dressing, as well as prevention and removal of insect disease and grass, etc.) by conventional ways, and includes administration after dilution with water or direct administration without addition of water such as broadcasting and so on. In the mixture, the ratio of pesticide amount, that is in the range of 45%∼100% of said standard dose, can further be optimized and adjusted according to different pesticide. For example, insecticides, bactericides, and growth regulators can be used at 45%-100% of standard dose; herbicides can be preferably used at 50%-100% of standard dose; amongst, the growth regulators such as mepiquat chloride, paclobutrazol, and the same can preferably used at 60%-100% of standard dose.
Based on above method, according to crops to be prevented/administrated, different optimization and adjustment can further be used. For example, when administrated to annual crops such as paddy and so on, and when administrated to stem and leaves or the earth's surface or the soil or the air interface, the ratio of the pesticide preparation and the synergistic agent in said mixture is 15∼6000 g or ml/60∼3000 ml per hectare, and preferably is 15∼6000 g or ml/150∼750 ml per hectare; when administrated to perennial crops including fruit trees and so on, the ratio of the pesticide preparation and the synergistic agent in said mixture is 30∼45000 g or ml/120∼6000 ml per hectare, and preferably is 30∼45000 g or ml/750∼2250 ml per hectare.
Experimental results showed that compared with single administration of standard dose or reduced dosage of pesticide by routine ways, in which the pesticide is not combined with synergists, the mixture of said synergist and the pesticide at amount of 45%∼100% of standard dose is administrated by the method of the present invention, and based on the amount of pesticide in the mixture, after administration, the half life or the complete degradation time of pesticide residue can be reduced by above 50%. If the administration is carried out within safety interval, the detection results of the pesticide residue in agricultural products are mostly "undetectable", realizing the effect of obviously shortening the half life or the complete degradation time of pesticide, as well as reducing the pesticide residue in agricultural products.
The obvious features of above residue-reducing method according to the present invention are as follows: although on the one hand, the synergist in the mixture that was composed of pesticides and the synergist can greatly reduce the amount of pesticides; on the other hand, the administration of the mixture can effectively shorten the half life of pesticide residue and/or the complete degradation time in crops. Lots of experimental examples and a large area of trial results indicate the method of the present invention not only influence the effect duration of pesticide used, but also can at least remain the control effect on plant diseases, insect pests, and grass, etc., and in most cases, the method further has the control effect over the single administration of pesticide via conventional way.

In the following, the content of the present invention is further illustrated by referring to the specific examples. However, it should not be understood that above-described subject scope of the present invention is just limited to the following examples. Without departing from above technical spirit of the present invention, various alternations or changes, made according to the common technical knowledge and conventional means in the art, are all included in the scope of the present invention. Synergists used in each example are all the mixtures of Tweens surfactants and N-R-2-pyrrolidone that are recorded in the Chinese patent number 96117683.0.

### Examples

### Example 1

The mixture of imidacloprid and synergist was administrated to cabbage, to investigate the effect on the half life and the complete degradation time of pesticide, as well as on the residual amount. Results indicated that except in the "imidacloprid 25% standard dose + 28 ml synergist/hectare" group, the half life slightly increased, and the half life of imidacloprid could be reduced up to above 50%, while the complete degradation time was mostly 9 days. For detection of residual amount, the time of obtaining "undetectable" results was 9-14 days. For the control using standard dose of imidacloprid, the half life was longer than those of experimental groups, and for the residual amount, the time of obtaining "undetectable" result was 21 days.

### 1. Drugs and apparatus

70% imidacloprid water dispersible granules, produced by North China Pharmaceutical Group AiNo Co. Ltd., commercially available;
Synergist: recorded in Chinese patent number 96117683.0;
Imidacloprid standard substance: Institute of Environmental Science, Ministry of Agriculture;
Imidacloprid preparation: 70% water dispersible granules, North China Pharmaceutical Group AiNo Co. Ltd., commercially available;
Dichloromethane (analytical pure), methanol, acetonitrile, n-hexane are all analytical pure, anhydrous sodium sulfate, etc..
Florisilsolid phase extraction cartridge (Beijing Super Legend Technology Co., Ltd)
Agilent 1260 HPLC, homogenizer, rotary evaporimeter, vortex mixer, nitrogen blowing apparatus, ultrasonic oscillator, etc.

### 2. Field treatment method of sample

According to "Trial Standard of Pesticide Residue in PRC Agricultural Professional Standard NY/T788-2004", when the bulb of cabbage grew to a half size, using the normal dose of imidacloprid (active component) as primary standard (Taking the intermediate value of 15.75-21 g/hectare as the standard dose), the mixtures composed of the ingredients shown in Table 1 was sprayed by small spray pot (60 kg/hectare), to the degree of the whole plant moist but no dropping.

**Table 1 Administrated drugs**

| Components of drugs | | Amount of Imidacloprid (active component) (g/hectare) | Amount of synergist (g/hectare) |
|---|---|---|---|
| 1 | Clear water control | 0 | 0 |
| 2 | Imidacloprid standard dose | 18.375 | 0 |
| 3 | Imidacloprid 25% standard dose + synergist | 4.594 | 3000 |
| 4 | Imidacloprid 25% standard dose + synergist | 4.594 | 1500 |
| 5 | Imidacloprid 25% standard dose + synergist | 4.594 | 750 |
| 6 | Imidacloprid 25% standard dose + synergist | 4.594 | 28 |
| 7 | Imidacloprid 50% standard dose + synergist | 9.188 | 3000 |
| 8 | Imidacloprid 50% standard dose + synergist | 9.188 | 1500 |
| 9 | Imidacloprid 50% standard dose + synergist | 9.188 | 225 |
| 10 | Imidacloprid 50% standard dose + synergist | 9.188 | 28 |
| 11 | Imidacloprid standard dose + synergist | 18.375 | 3000 |
| 12 | Imidacloprid standard dose + synergist | 18.375 | 1500 |
| 13 | Imidacloprid standard dose + synergist | 18.375 | 750 |
| 14 | Imidacloprid standard dose + synergist | 18.375 | 28 |

Each sample treated 6 m², with three replicates and total 294 small districts by randomized block design. 2h, 1d, 3d, 5d, 7d, 9d, and 14d after administration, samples were collected, till the sample had an "undetectable" amount. Two strains were picked up for each sample, and the aerial part was used.

### 3. Indoor residue detection method

### 1) Pre-processing of sample

After the sample collected in the field was reduced by the method of quartation, 10 g sample was taken out, to which were added 25 mL acetonitrile and 5 g anhydrous sodium sulfate, and the mixture was vortexed and shaken for 2 min, extracted with the help of ultrasonic shaking for 5 min, then centrifugated for 5 min at 3500 r/min. 15 mL of supernatant solution was taken out and concentrated to about 1 mL by rotary evaporation, for purification by passing through column. When passing through Florisil cartridge, the cartridge was activated using 10 mL dichloromethane before injection, and then eluted successively with 10 mL n-hexane and 10 mL dichloromethane, respectively, finally with 10 mL dichloromethane + methanol (50:50, v/v). After the eluate was dried by spurging nitrogen, the residue was diluted with methanol to 1 mL for test.

### 2) Chromatographic detection

Chromatographic conditions: detector DAD, chromatographic column AgilentExtend-C18 (25cm×4.6mm×5µm), column temperature 30 °C, mobile phase methanol:water (60:40), detection wavelength 269 nm, flow rate 1 mL/min, injection volume 10µl. Each sample was injected for two times, and the mean value was used.

### 4. Results

### 1) The addition recovery rate

The test results were shown in Table 2, and the recovery rates of imidacloprid in cabbage at different concentrations were 91.73%∼96.81, and the coefficient of variation was 1.82%∼2.43%. The addition recovery rates and the coefficient of variations of samples met the requirements of detection technology for the pesticide residue, indicating the preparative effect of sample by the method was good, and the detection accuracy and precision both met the requirements.

**Table 2. The addition recovery rate of imidacloprid in cabbage sample.**

| Pesticide | Concentration (mg/kg) | Recovery rate (%) | Coefficient of variation (%) |
|---|---|---|---|
| imidacloprid | 0.10 | 91.73 | 1.82 |
| | 1.00 | 92.67 | 2.43 |
| | 2.00 | 96.81 | 2.15 |

### 2) Minimum detectable amount and the minimum detectable concentration

Using the predetermined apparatus, the test results were shown in Table 3, and the minimum detectable amount of imidacloprid was 2.0×10-11g, and the minimum detectable concentration was 0.001 mg/L.

**Table 3 The minimum detectable amount and the minimum detectable concentration**

| Pesticide | imidacloprid |
|---|---|
| The minimum detectable amount (ng) | 6.0 |
| The minimum detectable concentration (mg/kg) | 0.01 |

3) The results of the degradation equation, the half life, and the degradation rate of imidacloprid + synergist in cabbage were shown in Tables 4-6, respectively.

**Table 4 The degradation equation and the half life (day) in cabbage after administration of the mixture of imidacloprid+synergist**

| Pesticide | Degradation equation | Determinate coefficient | Half life (d) |
|---|---|---|---|
| Standard dose | y=0.5309e^{-0.472x} | 0.9819 | 1.47 |
| Imidacloprid 25% standard dose + synergist 3000 mL/hectare | y=0.1322e^{-0.551x} | 0.9774 | 1.26 |
| Imidacloprid 25% standard dose + synergist 1500 mL/hectare | y=0.1272e^{-0.517x} | 0.9693 | 1.34 |
| Imidacloprid 25% standard dose + synergist 750 mL/hectare | y=0.14e^{-0615x} | 0.9718 | 1.13 |
| Imidacloprid 25% standard dose + synergist 28 mL/hectare | y=0.1269e^{-0.453x} | 0.9691 | 1.53 |
| Imidacloprid 50% standard dose + synergist 3000 mL/hectare | y=0.253e^{-0.629x} | 0.9407 | 1.10 |
| Imidacloprid 50% standard dose + synergist 1500 mL/hectare | y=0.2327e^{-0.563x} | 0.9176 | 1.23 |
| Imidacloprid 50% standard dose + synergist 750 mL/hectare | y=0.2923e^{-0.722x} | 0.9658 | 0.96 |
| Imidacloprid 50% standard dose + synergist 28 mL/hectare | y=0.2661e^{-0.493x} | 0.9773 | 1.41 |
| Imidacloprid standard dose + synergist 3000 mL/hectare | y=0.5903e^{-0.848x} | 0.9665 | 0.82 |
| Imidacloprid standard dose + synergist 1500 mL/hectare | y=0.5546e^{-0.771x} | 0.9636 | 0.90 |
| Imidacloprid standard dose + synergist 750 mL/hectare | y=0.7073e^{-1.035x} | 0.9742 | 0.67 |
| Imidacloprid standard dose + synergist 28 mL/hectare | y=0.5828e^{-0.524x} | 0.9899 | 1.32 |

**Table 5 The degradation half life (day) in cabbage after administration of the mixture of imidacloprid+synergist**

| The amount of imidacloprid | The amount of synergist in the mixture | | | | | | | |
|---|---|---|---|---|---|---|---|---|
| | 3000 mL/hectare | | 1500 mL/hectare | | 750 mL/hectare | | 28 mL/hectare | |
| | half life (day) | complete degradation time (day) | half life (day) | complete degradation time (day) | half life (day) | complete degradation time (day) | half life (day) | complete degradation time (day) |
| Imidacloprid 25% standard dose+ | 1.26 | 14 | 1.34 | 14 | 1.13 | 14 | 1.53 | 14 |
| Imidacloprid 50% standard dose+ | 1.10 | 9 | 1.23 | 9 | 0.96 | 9 | 1.41 | 9 |
| Imidacloprid standard dose+ | 0.82 | 9 | 0.90 | 9 | 0.67 | 9 | 1.32 | 9 |
| Single imidacloprid standard dose | half life: 1.47 days; complete degradation time: 21 days | | | | | | | |

| | | | | | | | | |
|---|---|---|---|---|---|---|---|---|
| Note: complete degradation time: the latest sampling time when the detection rate is zero. | | | | | | | | |

**Table 6 The degradation rate (%) of the mixture of imidacloprid+synergist after administrated to cabbage.**

| Treatment ways | Degradation rate (%) | | | | | | |
|---|---|---|---|---|---|---|---|
| | 1d | 3d | 5d | 7d | 9d | 14d | 21d |
| Clear water | 0.00 | 0.00 | 0.00 | 0.00 | 0.00 | 0.00 | 0.00 |
| imidaclopridstandard dose | 31.30 | 71.81 | 78.52 | 85.37 | 90.01 | 99.10 | 100.00 |
| Imidacloprid 25% standard dose + synergist 3000 mL/hectare | 53.89 | 75.35 | 81.07 | 88.06 | 95.00 | 100.00 | - |
| Imidacloprid 25% standard dose + synergist 1500 | 50.37 | 74.27 | 80.08 | 85.41 | 94.10 | 100.00 | - |
| Imidacloprid 25% standard dose + synergist 750 mL/hectare | 58.61 | 78.99 | 83.18 | 90.58 | 96.56 | 100.00 | - |
| Imidacloprid 25% standard dose + synergist 28 mL/hectare | 30.55 | 70.89 | 77.87 | 83.54 | 89.51 | 100.00 | - |
| Imidacloprid 50% standard dose + synergist 3000 mL/hectare | 62.64 | 84.56 | 85.84 | 92.95 | 100.00 | - | - |
| Imidacloprid 50% standard dose + synergist 1500 | 60.77 | 83.27 | 83.77 | 90.55 | 100.00 | - | - |
| Imidacloprid 50% standard dose + synergist 750 mL/hectare | 64.88 | 85.34 | 88.27 | 95.22 | 100.00 | - | - |
| Imidacloprid 50% standard dose + synergist 28 mL/hectare | 33.00 | 72.81 | 79.86 | 85.13 | 91.62 | 100.00 | - |
| Imidacloprid standard dose + synergist 3000 mL/hectare | 76.80 | 88.96 | 94.14 | 97.13 | 100.00 | - | - |
| Imidacloprid standard dose + synergist 1500 mL/hectare | 73.75 | 86.88 | 92.70 | 95.99 | 100.00 | - | - |
| Imidacloprid standard dose + synergist 750 mL/hectare | 81.23 | 91.93 | 97.11 | 98.55 | 100.00 | - | - |
| Imidacloprid standard dose+synergist 28 mL/hectare | 33.41 | 70.58 | 79.89 | 86.97 | 92.68 | 100.00 | - |

**Table 7 The comparative results of residual amount of imidacloprid in cabbage (mg/kg)**

| Treatment | Replic ation | Residual amount (mg/kg) | | | | | | | |
|---|---|---|---|---|---|---|---|---|---|
| | | 2h | 1d | 3d | 5d | 7d | 9d | 14d | 21d |
| The control clear water | 1 | undetectable | undetectable | undetectable | undetectable | undetectable | undetectable | undetectable | undetectable |
| | 2 | undetectable | undetectable | undetectable | undetectable | undetectable | undetectable | undetectable | undetectable |
| | 3 | undetectable | undetectable | undetectable | undetectable | undetectable | undetectable | undetectable | undetectable |
| | 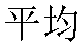 | undetectab | undetectable | undetectable | undetectable | undetectable | undetectable | undetectable | undetectable |
| Imidacloprid standard dose | 1 | 0.351247 | 0.238654 | 0.099352 | 0.072843 | 0.053233 | 0.035147 | 0.019235 | undetectable |
| | 2 | 0.348725 | 0.233756 | 0.098847 | 0.077238 | 0.051624 | 0.034287 | 0.018795 | undetectable |
| | 3 | 0.353245 | 0.248933 | 0.097835 | 0.075446 | 0.048706 | 0.035422 | 0.019827 | undetectable |
| | mean | 0.351072 | 0.240448 | 0.098678 | 0.075176 | 0.051188 | 0.034952 | 0.019286 | undetectable |
| Imidacloprid 25% standard dose + synergist 3000 mL/hectare | 1 | 0.084356 | 0.037652 | 0.021387 | 0.015962 | 0.008923 | 0.003527 | undetectable | - |
| | 2 | 0.086264 | 0.041326 | 0.019432 | 0.016385 | 0.010458 | 0.004852 | undetectable | - |
| | 3 | 0.085762 | 0.039243 | 0.022376 | 0.016194 | 0.011238 | 0.004428 | undetectable | - |
| | mean | 0.085461 | 0.039407 | 0.021065 | 0.016180 | 0.010206 | 0.004269 | undetectable | - |
| Imidacloprid 25% standard dose + synergist 1500 mL/hectare | 1 | 0.085537 | 0.044152 | 0.021452 | 0.016425 | 0.011643 | 0.004737 | undetectable | - |
| | 2 | 0.084925 | 0.039785 | 0.023147 | 0.017368 | 0.013274 | 0.005262 | undetectable | - |
| | 3 | 0.084376 | 0.042538 | 0.020963 | 0.016972 | 0.012258 | 0.005036 | undetectable | - |
| | mean | 0.084946 | 0.042158 | 0.021854 | 0.016922 | 0.012392 | 0.005012 | undetectable | - |
| Imidacloprid 25% standard dose + synergist 750 mL/hectare | 1 | 0.086432 | 0.034865 | 0.017655 | 0.014325 | 0.008300 | 0.002531 | undetectable | - |
| | 2 | 0.084768 | 0.036273 | 0.018324 | 0.015638 | 0.008000 | 0.003324 | undetectable | - |
| | 3 | 0.085629 | 0.035153 | 0.017986 | 0.013243 | 0.007900 | 0.002972 | undetectable | - |
| | mean | 0.085610 | 0.035430 | 0.017988 | 0.014402 | 0.008067 | 0.002942 | undetectable | - |
| Imidacloprid 25% standard dose + synergist 28 mL/hectare | 1 | 0.085387 | 0.059426 | 0.025362 | 0.018825 | 0.014533 | 0.008458 | undetectable | - |
| | 2 | 0.087145 | 0.057942 | 0.024938 | 0.019416 | 0.013925 | 0.009324 | undetectable | - |
| | 3 | 0.084652 | 0.061237 | 0.024576 | 0.018683 | 0.013876 | 0.009187 | undetectable | - |
| | mean | 0.085728 | 0.059535 | 0.024959 | 0.018975 | 0.014111 | 0.008990 | undetectable | - |
| Imidacloprid 50% standard dose + synergist 3000 mL/hectare | 1 | 0.169438 | 0.062854 | 0.025763 | 0.023726 | 0.011487 | undetectable | - | - |
| | 2 | 0.171253 | 0.065427 | 0.026159 | 0.024328 | 0.012546 | undetectable | - | - |
| | 3 | 0.172132 | 0.063287 | 0.026842 | 0.024139 | 0.011934 | undetectable | - | - |
| | mean | 0.170941 | 0.063856 | 0.026255 | 0.024064 | 0.011989 | undetectable | - | - |
| Imidacloprid 50% standard dose + synergist 1500 mL/hectare | 1 | 0.169537 | 0.065915 | 0.027468 | 0.028462 | 0.015397 | undetectable | - | - |
| | 2 | 0.172252 | 0.068732 | 0.029327 | 0.026935 | 0.016525 | undetectable | - | - |
| | 3 | 0.173596 | 0.067543 | 0.028544 | 0.027364 | 0.016268 | undetectable | - | - |
| | mean | 0.171795 | 0.067397 | 0.028446 | 0.027587 | 0.016063 | undetectable | - | - |
| Imidacloprid 50% standard dose + synergist 750 mL/hectare | 1 | 0.167895 | 0.059843 | 0.024283 | 0.018743 | 0.007465 | undetectable | - | - |
| | 2 | 0.175328 | 0.061327 | 0.025532 | 0.021217 | 0.008642 | undetectable | - | - |
| | 3 | 0.174262 | 0.060584 | 0.024947 | 0.019865 | 0.008291 | undetectable | - | - |
| | mean | 0.172495 | 0.060585 | 0.024921 | 0.019942 | 0.008133 | undetectable | - | - |
| Imidacloprid 50% standard dose + synergist 28 mL/hectare | 1 | 0.173325 | 0.113872 | 0.044732 | 0.033564 | 0.024356 | 0.014754 | undetectable | |
| | 2 | 0.168957 | 0.120629 | 0.047253 | 0.034973 | 0.026415 | 0.013528 | undetectable | - |
| | 3 | 0.171632 | 0.109835 | 0.046681 | 0.034165 | 0.025073 | 0.014476 | undetectable | - |
| | mean | 0.171305 | 0.114779 | 0.046222 | 0.034234 | 0.025281 | 0.014253 | undetectable | - |
| Imidacloprid standard dose + synergist 3000 mL/hectare | 1 | 0.345213 | 0.079632 | 0.036985 | 0.019582 | 0.009456 | undetectable | - | - |
| | 2 | 0.351276 | 0.081457 | 0.039643 | 0.021047 | 0.010373 | undetectable | - | - |
| | 3 | 0.342287 | 0.079952 | 0.038067 | 0.020236 | 0.009947 | undetectable | - | - |
| | mean | 0.346259 | 0.080347 | 0.038232 | 0.020288 | 0.009925 | undetectable | - | - |
| Imidacloprid standard dose + synergist 1500 mL/hectare | 1 | 0.345256 | 0.089432 | 0.045136 | 0.023968 | 0.012835 | undetectable | - | - |
| | 2 | 0.349879 | 0.090524 | 0.044872 | 0.026432 | 0.014769 | undetectable | - | - |
| | 3 | 0.341225 | 0.092137 | 0.045918 | 0.025249 | 0.013942 | undetectable | - | - |
| | mean | 0.345453 | 0.090698 | 0.045309 | 0.025216 | 0.013849 | undetectable | - | - |
| Imidacloprid standard dose + synergist 750 mL/hectare | 1 | 0.347238 | 0.064536 | 0.026795 | 0.009314 | 0.004462 | undetectable | - | - |
| | 2 | 0.351327 | 0.066249 | 0.029438 | 0.010587 | 0.005638 | undetectable | - | - |
| | 3 | 0.345145 | 0.065153 | 0.028013 | 0.010235 | 0.004984 | undetectable | - | - |
| | mean | 0.347903 | 0.065313 | 0.028082 | 0.010045 | 0.005028 | undetectable | - | - |
| Imidacloprid standard dose + synergist 28 mL/hectare | 1 | 0.345263 | 0.236135 | 0.099835 | 0.068964 | 0.043928 | 0.023942 | undetectable | - |
| | 2 | 0.339678 | 0.225329 | 0.103447 | 0.070563 | 0.046283 | 0.026435 | undetectable | - |
| | 3 | 0.354275 | 0.230517 | 0.102458 | 0.069425 | 0.045165 | 0.025713 | undetectable | - |
| | mean | 0.346405 | 0.230660 | 0.101913 | 0.069651 | 0.045125 | 0.025363 | undetectable | - |

From the results of Tables 4∼7, it can be seen that:
(1) For single administration of imidacloprid standard dose, as well as the administration of the mixture of 25% standard dose, 50% standard dose, 100% standard dose of imidacloprid with different concentrations of synergist (respectively called 25% mixture, 50% mixture, and standard dose mixture), the degradation dynamic curve in cabbage meets the first order kinetic equation, while the interval day of sampling shows exponential relationship with the residual amount of imidacloprid.
(2) For single administration and treatment of standard dose of imidacloprid, the half life in cabbage was 1.47 days, while the complete degradation time was 21 days; after treating with 25% mixture, 50% mixture, and standard dose mixture of imidacloprid with respective addition of 3000 mL/hectare, 1500 mL/hectare, and 750 mL/hectare of synergist, the half life of imidacloprid was 0.67∼1.34 days, while the complete degradation time was 9∼14 days, and both of them were shorter than the single administration group of standard dose of imidacloprid. For treating with three doses of imidacloprid with respective addition of 28 mL/hectare of synergist, except that the half life of imidacloprid in 25% mixture (1.53 days) was longer than that in the single administration group of imidacloprid, the complete degradation time of this group (14 days), as well as the half life (1.32∼1.41 days) and the complete degradation time (9∼14 days) of 50% mixture group and standard dose mixture group were shorter than those of the single administration group of imidacloprid. That indicated the application of synergist promoted the shortening of the half life and the degradation time of imidacloprid in cabbage.
(3) Under the conditions of using same dose of imidacloprid, as the dose decrease of synergist in the mixture, the half life of imidacloprid in cabbage presented the trend of gradual elongation, but when the amount of synergist was 750 mL/hectare, there was an obvious turning-point, and the degradation rate was the highest, the half life was the shortest (the mechanism clarification need further research), while the complete degradation time was constant.
(4) In the mixture containing same concentration of synergist, as the increase of the amount of imidacloprid, the degradation rate of imidacloprid in cabbage improved, the half life was shortened, and the complete degradation time also presented the trend of shortening. When the amount of synergist was 28 mL/hectare, the change of degradation time was not obvious, and close to that of the single administration of imidacloprid; the half life in the 25% mixture group of imidacloprid (1.53 days) was longer than that of the single administration group of standard dose of imidacloprid (1.47 days), while the complete degradation time (14 days) was shorter than that of the single administration group of standard dose of imidacloprid (21 days); the half life (1.41 days and 1.32 days) and the complete degradation time (i.e. the time when the residual amount was "undetectable") (14 days and 9 days) of 50% mixture group and standard dose mixture group of imidacloprid were both shorter than those of the single administration group of standard dose of imidacloprid.

Above experimental results showed that the mixture containing synergist can accelerate the degradation of imidacloprid in cabbage, and effectively shorten the half life and the complete degradation time of pesticides in vegetables, and this action was gradually attenuated as the amount reduction of synergist in the mixture. Within certain range, this action was gradually strengthened as the amount increase of pesticides. In the mixture containing different amount of imidacloprid, when the amount of synergist was 750 mL/hectare, the degradation rate of imidacloprid was the highest, and the half life and the complete degradation time were the shortest.

### Example 2

### Experiment on the effect of the mixture of synergist and 50% dimethoate emulsifiable concentrate on the pesticide residue when used for the prevention and cure of Unaspis yanonensis

According to the methods of experiment, detection, and analysis in Example 1, in Shuangliu area of Sichuan province, the mixture of 50% dimethoate emulsifiable concentrate and synergist according to the present invention was used for the prevention and cure of *Unaspis yanonensis.* The methods of experiment and analysis were same as those in Example 1. In the medicament, 50% dimethoate emulsifiable concentrate was 50% and 100% of standard dose, respectively. Experimental results showed that the potency of the mixture according to the present invention was identical to or better than the single administration of standard dose of emulsifiable concentrate, and 7∼14 days after administration, the residual amount of pesticide was "undetectable", while after single administration of pesticide at standard dose and 50% of standard dose, for the complete degradation time, the residual amounts of pesticide that was detected on day 21 after administration were 0.0093 mg/kg and 0.0165 mg/kg, respectively. Experimental results were shown in Table 8.

**Table 8 Effect of the mixture containing 50% dimethoate according to the present invention on the complete degradation time and the residual amount of pesticide**

| Composition of preparation and treatment (g or mL/hectare) | Efficienc y on day 21 or day 30 after administ ration (%) | The residual amount of pesticide in fruit after administration (mg/kg) | | | | | | | |
|---|---|---|---|---|---|---|---|---|---|
| | | 1h | 1d | 3d | 5d | 7d | 9d | 14d | 21d |
| 50% dimethoate emulsifiable concentrate standard dose 1500 | 90.69 | 45.7186 | 25.8752 | 15.921 | 5.2359 | 2.1846 | No. tested | 0.1567 | 0.0165 |
| 50% dimethoate emulsifiable concentrate standard dose 50% (750) | 36.83 | 21.8532 | 13.4637 | 8.9458 | 2.7501 | 1.2808 | Not tested | 0.0881 | 0.0093 |
| 50%dimethoate emulsifiable concentrate standard dose 50% (750)+synergist 6000 | 91.88 | 21.06498 | 2.3475 | 1.3390 | 0.3763 | 0.1012 | undetectable | - | - |
| 50%dimethoate emulsifiable concentrate standard dose 50% (750)+synergist 3000 | 92.26 | 21.9295 | 2.2587 | 1.2764 | 0.3080 | 0.0993 | undetect able | - | - |
| 50% dimethoate emulsifiable concentrate standard dose 50% (750)+synergist 1500 | 90.66 | 21.9106 | 2.2092 | 1.2596 | 0.2858 | 0.0882 | undetect able | - | - |
| 50% dimethoate emulsifiable concentrate standard dose 50% (750)+synergist 750 | 95.60 | 21.8503 | 2.3668 | 1.1159 | 0.2401 | 0.0565 | undetect able | - | - |
| 50% dimethoate emulsifiable concentrate standard dose 50% (750)+synergist 120 | 93.35 | 21.8483 | 2.7671 | 1.7583 | 0.5095 | 0.1260 | 0.0349 | undetect able | - |
| 50% dimethoate emulsifiable concentrate standard dose (1500)+synergist 5000 | 99.86 | 45.8092 | 2.2509 | 1.6115 | 0.4529 | 0.1088 | undetect able | - | - |
| 50% dimethoate emulsifiable concentrate standard dose (1500)+synergist 2500 | 98.31 | 45.7651 | 2.1956 | 1.2037 | 0.2718 | 0.0120 | undetect able | - | - |
| 50% dimethoate emulsifiable concentrate standard dose (1500)+synergist 1250 | 99.79 | 45.7508 | 2.2256 | 1.4195 | 0.2906 | 0.0412 | undetect able | - | - |
| 50% dimethoate emulsifiable concentrate standard dose (1500)+synergist 650 | 99.80 | 45.7243 | 2.3069 | 1.5858 | 0.3190 | 0.0502 | undetect able | - | - |

### Example 3

### Effect of the mixture of synergist and 6.9% fenoxaprop-P-ethyl concentrated emulsion on the pesticide residue when used for the prevention and control of Gramineae weeds in wheat

According to the methods of experiment, detection, and analysis in Example 1, in Shuangliu county of Sichuan province, the mixture of pesticide 6.9% fenoxaprop-P-ethyl concentrated emulsion at 50%, 70%, 100% of standard dose and synergist according to the present invention was used for the prevention and control of Gramineae weeds. Experimental results showed that the potency of the mixture was identical to or better than the single administration of standard dose of this pesticide, and the complete degradation time was 7∼9 days (when the amount of synergist was 60 g/hectare, the complete degradation time was 14 days); when standard dose of 6.9% fenoxaprop-P-ethyl concentrated emulsion was individually administrated as conventional way, the complete degradation time was longer than that obtained by using the mixture of the present invention, and on day 21, the residual amount of pesticide was 0.045 mg/kg. Results were shown in Table 9.

**Table 9 Effect of the mixture containing 6.9% fenoxaprop-P-ethyl concentrated emulsion according to the present invention on the complete degradation time and the residual amount of pesticide**

| Composition of preparation and treatment (g or mL/hectare) | Efficiency on day 30 after administrat ion (%) | The residual amount of pesticide in stems and leaves after administration (mg/kg) | | | | | | | |
|---|---|---|---|---|---|---|---|---|---|
| | | 1h | 1d | 3d | 5d | 7d | 9d | 14d | 21d |
| 6.9% fenoxaprop-P-ethyl standard dose 760 | 95.66 | 23.71 | 13.641 | 7.569 | 5.547 | 2.460 | 1.231 | 0.870 | 0.045 |
| 6.9% fenoxaprop-P-ethyl standard dose 760 +synergist 60 | 99.25 | 23.736 | 3.566 | 1.829 | 1.116 | 0.405 | 0.021 | undetect able | - |
| 6.9% fenoxaprop-P-ethyl standard dose 760+synergist 750 | 99.42 | 23.720 | 1.298 | 0.435 | 0.051 | undetect able | - | - | - |
| 6.9% fenoxaprop-P-ethyl standard dose 760+synergist 1500 | 99.37 | 23.711 | 1.306 | 0.448 | 0.052 | undetect able | - | - | - |
| 6.9% fenoxaprop-P-ethyl standard dose 760+synergist 3000 | 99.78 | 23.720 | 2.512 | 0.836 | 0.223 | 0.0781 | 0.0215 | undetect able | - |
| 6.9% fenoxaprop-P-ethyl standard dose 70% (532) +synergist 225 | 99.56 | 16.656 | 1.260 | 0.315 | 0.0418 | undetect able | - | - | - |
| 6.9% fenoxaprop-P-ethyl standard dose 70% (532) +synergist 450 | 99.23 | 16.661 | 1.253 | 0.290 | 0.0421 | undetect able | - | - | - |
| 6.9% fenoxaprop-P-ethyl standard dose 70% (532) +synergist 900 | 99.60 | 16.625 | 1.231 | 0.241 | 0.0420 | undetect able | - | - | - |
| 6.9% fenoxaprop-P-ethyl standard dose 70% (532) +synergist 1800 | 98.91 | 16.630 | 1.262 | 0.356 | 0.0538 | undetect able | - | - | - |
| 6.9% fenoxaprop-P-ethyl standard dose 70% (532) +synergist 2700 | 99.48 | 16.709 | 1.290 | 0.362 | 0.0604 | undetect able | - | - | - |
| 6.9% fenoxaprop-P-ethyl standard dose 50% (380) +synergist 450 | 95.51 | 11.853 | 1.276 | 0.284 | 0.0175 | undetect able | - | - | - |
| 6.9% fenoxaprop-P-ethyl standard dose 50% (380) +synergist 900 | 95.56 | 11.850 | 1.263 | 0.276 | 0.0167 | undetect able | - | - | - |
| 6.9% fenoxaprop-P-ethyl standard dose 50% (380) +synergist 1350 | 95.29 | 11.858 | 1.240 | 0.258 | 0.0128 | undetect able | - | - | - |
| 6.9% fenoxaprop-P-ethyl standard dose 50% (380) +synergist 2250 | 95.75 | 11.851 | 1.291 | 0.293 | 0.0382 | undetect able | - | - | - |
| 6.9% fenoxaprop-P-ethyl standard dose 50% (380) +synergist 2850 | 94.90 | 11.857 | 1.305 | 0.298 | 0.0451 | undetect able | - | - | - |

### Example 4

### Effect of the mixture of synergist and 15% pyridaben emulsifiable concentrate on the pesticide residue in tea trees

According to the methods of experiment, detection, and analysis in Example 1, in Mingshan city of Sichuan province, the mixture of pesticide 15% pyridaben emulsifiable concentrate at 100%, 70%, 45% of standard dose and synergist according to the present invention, as well as the single administration of pyridaben by conventional way, was used for the prevention and cure of *Empoasca pirisuga.* Experimental results showed that 7∼14 days after administration, the pesticide residue in the mixture groups according to the present invention reached "undetectable", while in the control group of individually administrating pyridaben by conventional way, on day 21 after administration, there was higher residual amount of pesticide. Results were shown in Table 10.

**Table 10 Effect of the mixture containing 15% pyridaben emulsifiable concentrate according to the present invention on the complete degradation time and the residual amount of pesticide**

| Composition of preparation and treatment (g or mL/hectare) | Efficiency on day 14 or day 30 after administrat ion (%) | The residual amount in tee leaves after administration (mg/kg) | | | | | | |
|---|---|---|---|---|---|---|---|---|
| | | 1H | 1d | 3d | 5d | 7d | 14d | 21d |
| 15% pyridaben standard dose 300 | 96.75 | 3.4672 | 1.9781 | 1.5128 | 1.2765 | 0.9953 | 0.5766 | 0.2078 |
| 15% pyridaben standard dose 45% (135) | 29.78 | 1.412 | 0.9238 | 0.6736 | 0.5101 | 0.4718 | 0.2159 | 0.0908 |
| 15% pyridaben standard dose 45% (135)+synergist 2500 | 95.79 | 1.405 | 0.621 | 0.2291 | 0.0714 | undetect able | - | - |
| 15% pyridaben standard dose 45% (135)+synergist 1250 | 94.88 | 1.4151 | 0.602 | 0.211 | 0.065 | undetect able | - | - |
| 15% pyridaben standard dose 45% (135)+synergist 625 | 96.18 | 1.3989 | 0.5258 | 0.187 | 0.054 | undetect able | - | - |
| 15% pyridaben standard dose 45% (135)+synergist 300 | 95.67 | 1.3966 | 0.5587 | 0.191 | 0.060 | undetect able | - | - |
| 15% pyridaben standard dose 45% (135)+synergist 150 | 93.35 | 1.4075 | 0.6197 | 0.211 | 0.0651 | undetect able | - | - |
| 15% pyridaben standard dose 45%(135)+synergist 60 | 96.72 | 1.4184 | 0.6915 | 0.275 | 0.098 | 0.006 | undetect able | - |
| 15% pyridaben standard dose 70% (210) | 69.81 | 2.1364 | 1.2652 | 1.0231 | 0.8549 | 0.6526 | 0.3637 | 0.1553 |
| 15% pyridaben standard dose 70% (210)+synergist 2000 | 99.78 | 2.1769 | 0.6855 | 0.298 | 0.111 | 0.002 | undetect able | - |
| 15% pyridaben standard dose 70% (210)+synergist 1000 | 99.80 | 2.0899 | 0.5674 | 0.178 | 0.066 | undetect able | - | - |
| 15% pyridaben standard dose 70% (210)+synergist 300 | 97.61 | 2.0456 | 0.6027 | 0.209 | 0.061 | undetect able | - | - |
| 15% pyridaben standard dose 70% (210)+synergist 100 | 99.57 | 2.0269 | 0.8148 | 0.371 | 0.091 | 0.0271 | undetect able | - |
| 15% pyridaben standard dose (300)+synergist 3000 | 99.85 | 3.4692 | 0.918 | 0.441 | 0.187 | 0.059 | undetect able | - |
| 15% pyridaben standard dose (300)+synergist 1500 | 99.54 | 3.4517 | 0.8528 | 0.312 | 0.031 | undetect able | - | - |
| 15% pyridaben standard dose (300)+synergist 500 | 99.92 | 3.4722 | 0.9017 | 0.210 | 0.035 | undetect able | - | - |
| 15% pyridaben standard dose (300)+synergist 100 | 99.87 | 3.4651 | 1.056 | 0.339 | 0.079 | 0.0031 | undetect able | - |

### Example 5

### Experiment on the effect of the mixtures of the present invention containing six pesticides such as chlorpyrifos, etc., on the half life and the residual amount of pesticides

According to the methods of experiment, detection, and analysis in Example 1, in 2006, chlorpyrifos was tested for the prevention and cure of citrus aphid, and beta-cypermethrin was tested for prevention and cure of diamond-back moth in cabbage in Shuangliu county of Sichuan province; in 2006, quizalofop-p was tested for prevention and cure of Gramineae weeds of cabbage in Guanghan city of Sichuan province; in 2007, bifenthrin was tested for prevention and cure of *Empoasca pirisuga* in Mingshan city of Sichuan province; in 2007, haloxyfop-P was tested for prevention and cure of Gramineae weeds of rape in Qionglai city of Sichuan province; in 2008, cyhalothrin was tested for prevention and cure of aphis pomi in Yanyuan county of Sichuan province. The mixtures of six pesticides at 45%, 70%, 100% of standard dose and synergist according to the present invention were administrated to the corresponding crops, and the half and the complete degradation time of pesticide residues in different crops were obviously shortened, and the half life can be shortened up to 62.7%, and the residual amounts were all reduced. Results were shown in Table 11.

**Table 11 Effect of the mixture containing different pesticide according to the present invention on the half life, the complete degradation time, and the residual amount of pesticide**

| Composition of preparation and treatment | Crops/prev ention and control targets | Amount of preparati on (g or mL/hect are) | Efficienc y on day 14 after administr ation or for the final time (%) | Samplin g time | Residual amount (mg/kg) | Degradation rate (%) | Degradation equation | Correl ation coeffic ient | Half life (d) |
|---|---|---|---|---|---|---|---|---|---|
| 40% chlorpyrifose mulsifiable concentrate standard dose | oringes/re d mite | 1800 | 98.2 | 1h | 34.21 | | C=34.562e^{-0.3067t} | 0.989 | 2.3 |
| | | | | 1d | 21.11 | 38.29 | | | |
| | | | | 3d | 12.67 | 62.96 | | | |
| | | | | 7d | 4.82 | 85.91 | | | |
| | | | | 14d | 0.72 | 97.89 | | | |
| | | | | 21d | 0.04 | 99.88 | | | |
| 40% chlorpyrifose mulsifiable concentrate standard dose+synergist | | 1800 +300 | 99.8 | 1h | 5.86 | | y=36.48e^{-0.5101x} | 0.9419 | 1.36 |
| | | | | 1d | 3.57 | 39.08 | | | |
| | | | | 3d | 1.43 | 75.60 | | | |
| | | | | 7d | 0.042 | 99.28 | | | |
| | | | | 14d | 0.0065 | 99.89 | | | |
| | | | | 21d | undetecta ble | 100 | | | |
| 4.5% beta-cypermethrin emulsifiable concentrate standard dose | cabbage/di amond-back moth | 375 | 68.9 | 1h | 1.00 | | C=2.1547e^{-062891t} | 0.9255 | 1.10 |
| | | | | 1d | 0.65 | 35 | | | |
| | | | | 3d | 0.44 | 56 | | | |
| | | | | 7d | 0.14 | 86 | | | |
| 4.5% beta-cypermethrin emulsifiable concentrate standard dose 70%+synergi st | | 262.5 +450 | 71.8 | 1h | | | C=7.8544e^{-1.3931t} | 0.9072 | 0.50 |
| | | | | 1d | 0.357 | | | | |
| | | | | 3d | 0.276 | 83.65 | | | |
| | | | | 7d | 0.019 | 98.95 | | | |
| 8.8%quizalof op-pemulsifiable concentrate standard dose | cabbage/G ramineae weeds | 900 | 89.78 | 1h | 7.89 | | y=6.8667e^{-02743x} | 0.9737 | 2.53 |
| | | | | 1d | 4.547 | 42.37 | | | |
| | | | | 3d | 2.523 | 68.02 | | | |
| | | | | 5d | 1.849 | 76.56 | | | |
| | | | | 7d | 0.82 | 89.60 | | | |
| | | | | 14d | 0.29 | 96.32 | | | |
| | | | | 21d | 0.0149 | 99.81 | | | |
| 8.8% quizalofop-p emulsifiable concentrate standard dose 45%+synergi st | | 405 +2250 | 85.85 | 1h | 2.79 | | y=2.1528e^{-0.4829x} | 0.9584 | 1.44 |
| | | | | 1d | 1.31 | 53.04 | | | |
| | | | | 3d | 0.32 | 88.53 | | | |
| | | | | 5d | 0.19 | 93.18 | | | |
| | | | | 7d | 0.089 | 96.81 | | | |
| | | | | 14d | undetecta ble | 100 | | | |
| | | | | 21d | | | | | |
| 2.5% bifenthrin emulsifiable concentrate standard dose | Tea tree/leafho ppers | 1500 | 95.89 | 1h | 3.4525 | | y=2.3301e^{-0.1037x} | 0.9629 | 6.68 |
| | | | | 1d | 1.8423 | 46.64 | | | |
| | | | | 3d | 1.3653 | 60.46 | | | |
| | | | | 5d | 1.0572 | 69.38 | | | |
| | | | | 7d | 0.8173 | 76.33 | | | |
| | | | | 14d | 0.3982 | 88.47 | | | |
| | | | | 21d | 0.1593 | 95.38 | | | |
| 2.5%bifenthri n emulsifiable concentrate standard dose 70%+synergi st | | 1050 +750 | 98.63 | 1h | 1.4644 | | y=1.2391e^{-0.2789x} | 0.9859 | 2.49 |
| | | | | 1d | 0.8154 | 44.32 | | | |
| | | | | 3d | 0.5683 | 61.20 | | | |
| | | | | 5d | 0.2883 | 80.31 | | | |
| | | | | 7d | 0.1325 | 90.95 | | | |
| | | | | 14d | 0.0394 | 97.30 | | | |
| | | | | 21d | undetecta ble | 100 | | | |
| 10.8% haloxyfop-P emulsifiable concentrate standard dose | rape/Gram ineae weeds | 300 | 95.66 | 1h | 2.94 | | y=2.2249e^{-0.4039x} | 0.9812 | 1.72 |
| | | | | 1d | 1.85 | 37.07 | | | |
| | | | | 3d | 0.48 | 83.67 | | | |
| | | | | 5d | 0.25 | 91.50 | | | |
| | | | | 7d | 0.10 | 96.60 | | | |
| | | | | 14d | 0.011 | 99.62 | | | |
| | | | | 21d | undetecta ble | 100 | | | |
| 10.8% haloxyfop-P standard dose+synergi st | | 300 +3000 | 98.92 | 1h | 2.79 | | y=2.1528e^{-0.4829x} | 0.9584 | 1.44 |
| | | | | 1d | 1.31 | 53.04 | | | |
| | | | | 3d | 0.32 | 88.53 | | | |
| | | | | 5d | 0.19 | 93.18 | | | |
| | | | | 7d | 0.089 | 96.81 | | | |
| | | | | 14d | undetecta ble | 100 | | | |
| | | | | 21d | | 100 | | | |
| 2.5% cyhalothrin emulsifiable concentrate standard dose | Apple /aphids | 1500 | 98.54 | 1h | 2.0338 | | y=1.2391e^{-0.2789x} | 0.9859 | 2.49 |
| | | | | 1d | 1.8571 | 8.69 | y=2.1528e^{-0.4829x} | | |
| | | | | 3d | 1.7132 | 15.77 | y=2.5305e^{-0.2189x} | 0.9706 | 3.17 |
| | | | | 5d | 1.0939 | 46.22 | y=2.1528e^{-0.4829x} | | |
| | | | | 7d | 0.5906 | 70.96 | y=2.1528e^{-0.4829x} | | |
| | | | | 14d | 0.0710 | 96.50 | y=2.1528e^{-0.4829x} | | |
| | | | | 21d | 0.0318 | 98.44 | y=2.1528e^{-0.4829x} | | |
| 2.5%cyhaloth rin emulsifiable concentrate standard dose 45%+synergi st | | 675 +6000 | 99.70 | 1h | 0.7285 | | y=0.8948e^{-0.2431x} | 0.9409 | 2.85 |
| | | | | 1d | 0.6451 | 11.44 | | | |
| | | | | 3d | 0.5794 | 20.46 | | | |
| | | | | 5d | 0.3608 | 50.47 | | | |
| | | | | 7d | 0.1911 | 73.77 | | | |
| | | | | 14d | 0.0119 | 98.36 | | | |
| | | | | 21d | undetecta ble | 100 | | | |

### Example 6

### Experiment on the effect of the mixtures of the present invention containing nine pesticides such as chlorfenapyr, etc., and synergist on the pesticide residue

According to the methods of experiment, detection, and analysis in Example 1, in 2012, 10% chlorfenapyr emulsifiable concentrate was used for the prevention and cure of cabbage diamond-back moth in Shuangliu county of Sichuan province; in 2013, 2.5% deltamethrin emulsifiable concentrate was used for prevention and cure of lima bean pod borer on cowpea in Neijiang city of Sichuan province; in 2013, 2% kasugamycin liquor was used for the prevention and cure of rice blast in Shuangliu county of Sichuan province; in 2015, 25% ICIA 5504 water dispersible granule was used for the prevention and cure of strawberry anthrax in Chongqing city; in 2014, 20% chlorantraniliprole suspending agent was used for the prevention and cure of striped rice borer on rice in Liu'an city of Anhui province; in 2011, 40% isoprothiolane emulsifiable concentrate was used for the prevention and cure of rice blast in Longhui county of Hunan province; in 2012, 12.5% BAS 480F suspending agent was used for the prevention and cure of green smut on rice in Jingzhou city of Hubei province; in 2015, 0.3% azadirachtin emulsifiable concentrate + 25% carbendazim wettable powder was used for the prevention and cure of aphids tan disease on apple in Yantai city of Shandong province. The mixtures of nine pesticides and synergist according to the present invention were applied to different crops for testing. The complete degradation time and the pesticide residue results for the same period were particularly investigated. Experimental results showed that the complete degradation time of each pesticide was obviously shortened.

Amongst, the effect of reducing residue for 2.5% deltamethrin emulsifiable concentrate was obvious, and for the mixture of the pesticide at standard dose and 45% standard dose with synergist, respectively, on day 5 after administration, the residual amount was detected, that was "undetectable"; when 2.5% deltamethrin emulsifiable concentrate was individually administrated at standard dose and at 45% standard dose, on day 21 after administration, the residual amounts were still 0.003 mg/kg, 0.001 mg/kg, respectively. Results were shown in Table 12.

**Table 12 Effect of the mixtures of the present invention containing nine pesticides such as chlorfenapyr emulsifiable concentrate, etc., on the complete degradation time and the pesticide residue of pesticide**

| Composition of preparation and treatment | Crops/prev ention and control targets | Amount of preparati on (g or mL/hect are) | Efficie ncy on day 14 after adminis tration or for the final time (%) | The residual amount of pesticide on stem and leaves or in fruits (mg/kg) | | | | | |
|---|---|---|---|---|---|---|---|---|---|
| | | | | 3d | 5d | 7d | 9d | 14d | 21d |
| 10% chlorfenapyr emulsifiable concentrate standard dose | cabbage/di amond-back moth | 675 | 75 | 1.531 | 1.331 | 0.648 | 0.422 | 0.217 | 0.008 |
| 10% chlorfenapyr emulsifiable concentrate standard dose+synergist | | 675+450 | 85 | 0.198 | 0.019 | 0.007 | undetec table | - | - |
| 10% chlorfenapyr emulsifiable concentrate standard dose 70% | | 472.5 | 60.8 | 1.147 | 1.011 | 0.498 | 0.321 | 0.158 | 0.006 |
| 10% chlorfenapyr emulsifiable concentrate standard dose 70%+synergist | | 472.5 +1500 | 83.3 | 0.089 | 0.010 | 0.005 | undetec table | - | - |
| 2% kasugamycin liquor standard dose | rice/blast | 1500 | 90.5 | 0.106 | 0.008 | undetec table | - | - | - |
| 2% kasugamycin liquor standard dose+synergist | | 1500 +2250 | 91.9 | undetect able | - | - | - | - | - |
| 2% kasugamycin liquor standard dose 50% | | 750 | 46.7 | 0.065 | 0.005 | undetec table | - | - | - |
| 2% kasugamycin liquor standard dose 50% + synergist | | 750 +3000 | 91.5 | 0.015 | undetect able | - | - | - | - |
| 2.5% deltamethrin emulsifiable concentrate standard dose | cowpea/li ma bean pod borer | 225 | 95.6 | 0.515 | 0.317 | 0.220 | 0.183 | 0.039 | 0.003 |
| 2.5% deltamethrin emulsifiable concentrate standard dose + synergist | | 225+225 | 98.7 | 0.008 | undetect able | - | - | - | - |
| 2.5% deltamethrin emulsifiable concentrate standard dose 45% | | 101.25 | 46.5 | 0.218 | 0.131 | 0.088 | 0.016 | 0.015 | 0.001 |
| 2.5% deltamethrin emulsifiable concentrate standard dose 45% + synergist | | 101.25+ 750 | 93.1 | 0.006 | undetect able | - | - | - | - |
| 25% ICIA 5504 water dispersible granules standard dose | strawberry /anthrax | 540 | 88.5 | 0.568 | 0.288 | 0.133 | 0.085 | 0.039 | undete ctable |
| 25% ICIA 5504 water dispersible granules standard dose + synergist | | 540+150 | 89.3 | 0.087 | undetect able | - | - | - | - |
| 25% ICIA 5504 water dispersible granules standard dose 80% | | 432 | 79.4 | 0.462 | 0.241 | 0.116 | 0.067 | 0.031 | undete ctable |
| 25% ICIA 5504 water dispersible granules standard dose 80% + synergist | | 432+300 | 89.8 | 0.061 | undetect able | - | - | - | - |
| 20% chlorantraniliprole suspending agent standard dose | rice/striped rice borer | 150 | 96.7 | 0.282 | 0.240 | 0.201 | 0.056 | 0.028 | undete ctable |
| 20% chlorantraniliprole suspending agent standard dose+synergist | | 150+375 | 98.9 | 0.011 | 0.004 | undetec table | - | - | - |
| 20% chlorantraniliprole suspending agent standard dose 60% | | 90 | 50.8 | 0.172 | 0.151 | 0.166 | 0.038 | 0.017 | undete ctable |
| 20% chlorantraniliprole suspending agent standard dose 60% + synergist | | 90+1125 | 98.9 | 0.009 | 0.003 | undetec table | - | - | - |
| 40% isoprothiolane emulsifiable concentrate standard dose | rice/rice blast | 1125 | 90.6 | 0.861 | 0.783 | 0.516 | 0.453 | 0.152 | 0.020 |
| 40% isoprothiolane emulsifiable concentrate standard dose + synergist | | 1125 +1350 | 96.3 | 0.159 | 0.061 | 0.012 | undetec table | - | - |
| 40% isoprothiolane emulsifiable concentrate standard dose 45% | | 506.25 | -12.8 | 0.393 | 0.352 | 0.234 | 0.201 | 0.068 | 0.009 |
| 40% isoprothiolane emulsifiable concentrate standard dose 45% + synergist | | 506.25+ 1800 | 87.9 | 0.031 | 0.011 | 0.006 | undetec table | - | - |
| 12.5% BAS 480F suspending agent standard dose | rice/green smut | 900 | 79.8 | 2.508 | 1.979 | 1.483 | 0.813 | 0.464 | 0.265 |
| 12.5% BAS 480F suspending agent standard dose + synergist | | 900+600 | 89.7 | 0.614 | 0.218 | 0.072 | undetec table | - | - |
| 12.5% BAS 480F suspending agent standard dose 50% | | 450 | -21.8 | 1.267 | 1.041 | 0.846 | 0.463 | 0.255 | 0.136 |
| 12.5% BAS 480F suspending agent standard dose 50% + synergist | | 450+750 | 82.3 | 0.585 | 0.197 | 0.046 | undetec table | - | - |
| ① 0.3% azadirachtin emulsifiable concentrate standard dose+② 25% carbendazim wettable powder standard dose | apple/① aphids② tan disease | 6000 +6000 | ①61.8 ②88.2 | aiahaidc 0.45 / carbend azim 3.375 | aiahaidc 0.02 / carbend azim 2.025 | Aiahaid c undetec table /carben dazim 1. 318 | - Carben dazim 0.726 | Carben dazim 0.253 | Carben dazim 0.06 |
| ① 0.3%azadirachtin emulsifiable concentrate standard dose 60% + ② 25% carbendazim wettable powder standard dose 60% + synergist | | 2400 ①+2400 ②+2250 | ①75.1 ②89.1 | undetect able /carbend azim 0.718 | / carbend azim 0.2 17 | / carben dazim 0. 072 | - carbend azim un detectab le | - - | - - |

| | | | | | | | | | |
|---|---|---|---|---|---|---|---|---|---|
| Note: ① and ② in Table represent corresponding amount, prevention and control targets, as well as corresponding efficiency when pesticides ① and ② were simultaneously administrated. | | | | | | | | | |

### Example 7

### Effect of the mixture of the present invention containing the pesticide such as diflubenzuron emulsifiable concentrate, etc., and synergist on the pesticide residue

According to the methods of experiment, detection, and analysis in Example 1, in 2013, 5% diflubenzuron emulsifiable concentrate was tested in Pengshan county of Sichuan province; in 2014, 15% paclobutrazol wettable powder was tested in Santai county of Sichuan province, and 25% trazodone wettable powder was tested in Shuangliu county of Sichuan province; in 2015, 2.5% lambda-cyhalothrin was tested in Zibo city of Shandong province, 5% fipronil suspending agent was tested in Neijiang city of Sichuan province; in 2016, 90% monosultap was tested in Pengshan county of Sichuan province, 90% acetochlor and 20% triazophos emulsifiable concentrate were tested in Shuangliu county of Sichuan province, 25% propiconazole was tested in Haikou city of Hainan province, and 45% sulfur was tested in Yili city of Xinjiang Uygur Autonomous Region, etc.. Various pesticides were used for the prevention and cure of different pests on crops (as shown in the following Table). Four treatment groups including the standard dose group of pesticide, the standard dose of pesticide + synergist group, the dose-reduction group of pesticide, and the dose-reduction of pesticide + synergist group were used for the test of the complete degradation time of pesticide, as well as the residual amount of pesticide for the same-period of crops.

Experimental results showed that the complete degradation times of pesticides for the standard dose of pesticide + synergist group and the dose-reduction of pesticide + synergist group were mostly nine days, and the shortest time for complete degradation of acetochlor was one day; while for the single application of the standard dose of pesticide and the dose-reduction of pesticide, the complete degradation time of acetochlor was mostly 21 days, even more than 21 days, and the shortest time was also seven days. Detailed results were shown in Table 13.

**Table 13 Effect of the mixtures of the present invention containing ten pesticides such as trazodone, etc., on the complete degradation time and the pesticide residue of pesticide**

| Composition of preparation and treatment | Crops/pr evention and control targets | Amoun t of prepara tion (g or mL/hec tare) | Efficie ncy on day 14 after adminis tration or for the final time (%) | The residual amount of pesticide on stem and leaves or in fruits (mg/kg) | | | | | |
|---|---|---|---|---|---|---|---|---|---|
| | | | | 1d | 5d | 7d | 9d | 14d | 21d |
| 20% triazophos emulsifiable concentrate standard dose | rice/ strip ed rice borer | 1500 | 72 | 2.625 | 1.510 | 1.124 | 0.853 | 0.562 | 0.153 |
| 20% triazophos emulsifiable concentrate standard dose + synergist | | 1500 +60 | 86 | 1.125 | 0.281 | 0.130 | 0.064 | undete ctable | - |
| 50% standa synergist | | 750 +150 | 75 | 1.100 | 0.261 | 0.061 | undetec table | - | - |
| 2.5% lambda-cyhalothrin emulsifiable concentrate standard dose | corn/soil insect | 450 | 78.9 | 0.490 | 0.241 | 0.151 | 0.112 | 0.091 | 0.031 |
| 2.5% lambda-cyhalothrin emulsifiable concentrate standard dose + synergist | | 450 +150 | 88.7 | 0.152 | 0.076 | 0.021 | undetec table | - | - |
| 70% standard dose of 2.5% lambda-cyhalothrin emulsifiable concentrate + synergist | | 315 +300 | 85.1 | 0.148 | 0.074 | 0.022 | undetec table | - | - |
| 5% fipronil suspending agent standard dose | cabbage/ diamond -back moth | 500 | 85.5 | 0.320 | 0.112 | 0.085 | 0.062 | 0.037 | 0.006 |
| 5%fipronilsuspending agentstandard dose+synergist | | 500 +300 | 89.8 | 0.086 | 0.021 | 0.005 | undetec table | - | - |
| 60% standard dose of 5% fipronil suspending agent | | 300 | 69.6 | 0.215 | 0.069 | 0.052 | 0.039 | 0.023 | 0.004 |
| 60% standard dose of 5% fipronil | | 300 | 90.1 | 0.084 | 0.020 | 0.005 | undetec | - | - |
| suspending agent + synergist | | +300 | | | | | table | | |
| 90% monosultap soluble powder standard dose | sugarcan e/pyralis | 2400 | 76.8 | 6.894 | 2.106 | 0.755 | undetec table | - | - |
| 90% monosultap soluble powder standard dose + synergist | | 2400 +600 | 89.8 | 0.078 | undetect able | - | - | - | - |
| 50% standard dose of 90% monosultap soluble powder | | 1200 | 35.0 | 3.933 | 1.095 | 0.415 | undetec table | - | - |
| 50% standard dose of 90% monosultap soluble powder + synergist | | 1200 +600 | 75.9 | 0.076 | undetect able | - | - | - | - |
| 25% trazodone wettable powder standard dose | grape/po wdery mildew | 225 | 70.6 | 2.892 | 2.294 | 1.691 | 1.267 | 0.936 | 0.591 |
| 25% trazodone wettable powder standard dose + synergist | | 225 +1200 | 85.3 | 1.590 | 0.187 | 0.031 | undetec table | - | - |
| 45% standard dose of 25% trazodone wettable powder | | 101.25 | 30.5 | 1.301 | 1.078 | 0.790 | 0.556 | 0.393 | 0.266 |
| 45% standard dose of 25% trazodone wettable powder +synergist | | 101.25 +1200 | 72.8 | 1.581 | 0.179 | 0.030 | undetec table | - | - |
| 90% acetochlor emulsifiable concentrate standard dose | soybean/ Gramine ae weeds | 750 | 89.6 | 0.087 | 0.021 | undetec table | - | - | - |
| 90% acetochlor emulsifiable concentrate standard dose + synergist | | 750 +2400 | 99.1 | undetect able | - | - | - | - | - |
| 50% standard dose of 90% acetochlor emulsifiable concentrate | | 375 | 60.9 | 0.048 | 0.012 | undetectable | - | - | - |
| 50% standard dose of 90% acetochlor emulsifiable concentrate standard dose + synergist | | 375 +2400 | 95.2 | undetect able | - | - | - | - | - |
| 25% propiconazole emulsifiable concentrate standard dose | banana/l eaf pot | 400 | 80.1 | 1.381 | 0.966 | 0.783 | 0.531 | 0.171 | 0.059 |
| 25% propiconazole emulsifiable concentrate standard dose + synergist | | 400 +4800 | 85.9 | 0.713 | 0.110 | 0.033 | undetec table | - | - |
| 45% standard dose of 25% propiconazole emulsifiable concentrate | | 180 | 45.7 | 0.601 | 0.434 | 0.328 | 0.245 | 0.077 | 0.025 |
| 45% standard dose of 25% propiconazole emulsifiable concentrate + synergist | | 180 +4800 | 81.1 | 0.701 | 0.100 | 0.030 | undetec table | - | - |
| 5% diflubenzuron emulsifiable concentrate standard dose | orange /phyllox era | 12000 | 75.2 | 2.153 | 1.376 | 0.830 | 0.611 | 0.457 | 0.152 |
| 5% diflubenzuron emulsifiable concentrate standard dose + synergist | | 12000 +6000 | 90.8 | 0.628 | 0.081 | undetec table | - | - | - |
| 70% standard dose of 5% diflubenzuron emulsifiable concentrate | | 8400 | 62.9 | 1.161 | 1.044 | 0.614 | 0.469 | 0.337 | 0.108 |
| 70% standard dose of 5% diflubenzuron emulsifiable concentrate + synergist | | 8400 +6000 | 91.1 | 0.599 | 0.079 | undetec table | - | - | - |
| 45% sulfur suspending agent standard dose | medlar/r ust mite | 11111 | 78.5 | 30.105 | 10.033 | 6.570 | 4.582 | 1.536 | 0.691 |
| 45% sulfur suspending agent standard dose + synergist | | 11111 +5000 | 85.6 | 6.376 | 0.718 | 0.085 | undetec table | - | - |
| 60% standard dose of 45% sulfur suspending agent | | 6666 | 45.7 | 19.983 | 6.155 | 4.274 | 2.981 | 1.010 | 0.463 |
| 60% standard dose of 45% sulfur suspending agent + synergist | | 6666 +5000 | 80.9 | 6.354 | 0.715 | 0.079 | undetec table | - | - |
| 15% paclobutrazol wettable powder standard dose | creeping liriope/c ontrol of growth | 45000 | 1cm shorter than the blank control | 2.625 | 1.838 | 1.375 | 0.101 | 0.531 | 0.178 |
| 15% paclobutrazol wettable powder standard dose + synergist | | 45000 +3000 | 1.5cm shorter than the blank control | 1.291 | 0.143 | 0.045 | undetec table | - | - |
| 70% standard dose of 15% paclobutrazol wettable powder | | 31500 | 0.3cm shorter than the blank control | 1.864 | 1.361 | 1.059 | 0.075 | 0.400 | 0.126 |
| 70% standard dose of 15% paclobutrazol wettable + synergist | | 31500 +3000 | 1.3cm shorter than the blank control | 1.289 | 0.144 | 0.044 | undetec table | - | - |

Experimental results showed that after the mixture of pesticide and the synergist was administrated by using the method of the present invention, the half life and/or the complete degradation time of pesticide residue in crops and/or agricultural products including grains, vegetables, tea trees, tobaccos, Chinese herbs, fruit trees, etc., can be obviously shortened, and the residual amount of pesticide in agricultural products can be significantly reduced.

Thus, the methods of the present invention have wide application, and possess great significance and promotional values for protection of agricultural products' safety, environment, ecosystem, as well as for saving sources and human lives health, and so on.

## Claims

1. The pesticide residue-reducing method of the present invention, shortening the half life of pesticide residue and/or the complete degradation time, **characterized in that** during the whole growing period of crops or before seeding, the available mixture consisted of the pesticide preparation at 45%∼100% of normal dose and the synergistic agent is applied for at least one time as the conventional way, in which the ratio of the pesticide preparation and the synergistic agent is 15∼45000 g or ml/60∼6000 ml per hectare. The synergist is the mixture of Tween surfactants and N-R-2-pyrrolidone recorded in Chinese patent with the number 96117683.0.

2. The method according to claim 1, **characterized in that** in the administrated mixture, the dosage of pesticide is 50%∼80% of routine usage amount.

3. The method according to claim 1 or 2, **characterized in that** when administrated to annual crops, the earth's surface or in the soil, the ratio of the pesticide preparation and the synergistic agent in said mixture is 15∼6000 g or ml/60∼3000 ml per hectare, and preferably is 15∼6000 g or ml/150∼750 ml per hectare.

4. The method according to claim 1 or 2, **characterized in that** when administrated to perennial crops, the ratio of the pesticide preparation and the synergistic agent in said mixture is 30∼45000 g or ml/120∼6000 ml per hectare, and preferably is 30∼45000 g or ml/750∼2250 ml per hectare.

5. The method according to claim 1 or 2, **characterized in that** in said mixture, the volume composition of synergists is:
| | |
|---|---|
| Tweens surfactants | 15∼95%, |
| N-R-2-pyrrolidone | 5∼85%, |
| Common solvents for pesticides | 0∼50%. |

6. The method according to claim 5, **characterized in that** in said mixture, the volume composition of synergists is:
| | |
|---|---|
| Tweens surfactants | 30∼85%, |
| N-R-2-pyrrolidone | 8∼60%, |
| Common solvents for pesticides | 0∼50%. |

7. The method according to claim 6, **characterized in that** in said mixture, the volume composition of synergists is:
| | |
|---|---|
| Tweens surfactants | 45∼70%, |
| N-R-2-pyrrolidone | 10∼40%, |
| Common solvents for pesticides | 0∼50%. |

8. The method according to claim 5, **characterized in that** in said mixture, N-R-2-pyrrolidone used in synergist is selected from the group of N-H-2-pyrrolidone, N-methyl-2-pyrrolidone, N-ethyl-2-pyrrolidone, N-octyl-2-pyrrolidone, N-dodecyl-2-pyrrolidone.

9. The method according to claim 5, **characterized in that** in said mixture, Tweens surfactants used in synergist are selected from at least one of Tween-20, Tween-40, Tween-60, Tween-65, Tween-80, Tween-85.

10. The method according to claim 5, **characterized in that** in said mixture, solvents used in synergist are selected from at least one of methanol, ethanol, toluene, xylene, acetone and the same.
